# EUROPÄISCHE PATENTANMELDUNG

(11) **EP 1 380 544 A1**
(43) Veröffentlichungstag der Anmeldung: **14.01.2004**
(21) Anmeldenummer: 03450164.3
(22) Anmeldetag: 03.07.2003
(51) Int. Cl.: C02F 3/06, C02F 3/08

(54) **Verfahren und Vorrichtung zur Reinigung von verschmutztem Wasser**

(30) Priorität: 09.07.2002 AT 10382002
(71) Anmelder: Beisteiner, Ernst, 00-740 Warschau (PL)
(72) Erfinder: Beisteiner, Ernst, 00-740 Warschau (PL)
(74) Vertreter: Babeluk, Michael, Dipl.-Ing. Mag.

(57) **Zusammenfassung**

Die Erfindung betrifft ein Verfahren und eine Vorrichtung zur Reinigung von verschmutztem Wasser, bei dem im Wasser eine Füllkörperpackung (5) angeordnet wird, die von Mikroorganismen besiedelt ist, und diese Füllkörperpackung (5) zumindest zeitweise belüftet wird. Eine einfacher Aufbau bei hoher Wirksamkeit wird dadurch erreicht, dass die Belüftung zumindest teilweise dadurch erfolgt, dass die Füllkörperpackung (5) als Ganzes über die Wasseroberfläche (13) angehoben wird.

## Beschreibung

Die Erfindung betrifft ein Verfahren zur Reinigung von verschmutztem Wasser gemäß dem Oberbegriff von Patentanspruch 1.

Wesentliche Bestandteile von Kläranlagen zur Reinigung von Abwasser sind Belüftungsbecken, in denen die zu reinigenden Abwässer mit dem notwendigen Sauerstoff versorgt werden. Üblicherweise sind am Boden dieser Belüftungsbecken Belüftungskörper zum Ausblasen von Luft vorgesehen. Um die eingeblasene Luft so gut als möglich auszunützen und die Verweilzeit der Luft im Belüftungsbecken zu vergrößern, ist es bekannt, in dem Belüftungsbecken Füllkörper vorzusehen. Diese Füllkörper können einerseits als Schüttung von einzelnen Füllkörpern oder in Form von Packungen ausgebildet sein. Wesentlich ist, dass der Weg der einzelnen Luftbläschen durch diese Füllkörper verlängert wird, so dass die Abgabe von Sauerstoff an das Abwasser verbessert wird und damit der Druckluftbedarf wesentlich verringert wird, was den Energieaufwand der Kläranlage verringert. Ein weiterer Vorteil der Anordnung von Füllkörpern in dem Belüftungsbecken ist die Möglichkeit, dass sich auf der Oberfläche der Füllkörper Mikroorganismen ansiedeln können, die auf diese Weise stationär im Belüftungsbecken verbleiben und dadurch den Umsatz verbessern. Ungeachtet der genannten Vorteile stellen sich jedoch für Kläranlagen mit stark schwankendem Abwasseranfall Probleme bei der Festsetzung des Ausmaßes der Belüftung. Um die Mikroorganismen am Leben zu erhalten, ist stets eine vorbestimmte Minimalbelüftung periodisch vorzunehmen, auch wenn nur eine geringe Abwassermenge anfällt. Bezogen auf die Abwassermenge ist die erforderliche Luftmenge dabei sehr groß und damit ist auch der Energieaufwand überproportional groß. Um diese Nachteile zu vermeiden, sind Lösungen bekannt geworden, bei denen die Füllkörper mechanisch bewegt werden, wodurch die eingebrachte Luftmenge reduziert werden kann. Solche Lösungen sind beispielsweise in der EP 0 936 189 B1 oder der EP 0 956 271 B1 bekannt. Nachteilig bei diesen Lösungen ist der erhöhte Aufwand zum mechanischen Antrieb der Füllkörper.

Ein weiteres Problem ist die biologische Reinigung von Oberflächengewässern. So ist beispielsweise die ökologische Belastung von Badeteichen während Hitzeperioden in den Sommermonaten besonders groß, was zu einer merklichen Verschlechterung der Wasserqualität führt. Es ist zwar grundsätzlich möglich, die Wasserqualität dadurch zu verbessern, dass Wasser abgepumpt und beispielsweise in einem Klärteich einer Reinigung unterzogen wird, um wieder in das Oberflächengewässer rückgeführt zu werden, der Aufwand für solche Lösungen ist jedoch zumeist unvertretbar hoch.

Aufgabe der vorliegenden Erfindung ist es, diese Nachteile zu vermeiden und eine Lösung anzugeben, die vielseitig anwendbar ist. Einerseits sollen dabei ein Verfahren und eine Vorrichtung angeboten werden, die zur Reinigung von Abwasser in Kläranlagen dienen und die auch für Kleinkläranlagen wirtschaftlich tragbar ist. Andererseits soll eine Möglichkeit gefunden werden, mit geringem Aufwand auch Oberflächengewässer zu behandeln, um die Wasserqualität anzuheben. Dies soll auf weitgehend natürlichem Wege durch Unterstützung der in der Natur selbsttätig ablaufenden Reinigungsprozesse erfolgen. Dabei soll zur Erreichung eines einfachen Aufbaus und eines wartungsfreien Betriebes ohne jeglichen mechanischen Antrieb das Auslangen gefunden werden.

Erfindungsgemäß werden diese Aufgaben dadurch gelöst, dass die Belüftung zumindest teilweise dadurch erfolgt, dass die Füllkörperpackung als Ganzes über die Wasseroberfläche angehoben wird.

Ein wesentlicher Vorteil der vorliegenden Erfindung bei der Anwendung in Kläranlagen besteht darin, dass durch die vertikale Bewegung praktisch das gesamte Volumen des Belüftungsbeckens für die Füllkörper zur Verfügung steht. Ein Grundgedanke der Erfindung ist es, während der Belüftungsphasen die Füllkörpereinrichtung abzusenken, um den maximalen Effekt im oben beschriebenen Sinne zu erreichen. In Zeiten, in denen keine Belüftung stattfindet, wird die Füllkörpereinrichtung größtenteils nach oben ausgefahren, so dass die Füllkörper mit der Umgebungsluft in Kontakt kommen, wodurch ein Überleben der Mikroorganismen auch ohne externe Luftzufuhr möglich ist. Auf diese Weise ist es möglich, die Belüftungsphasen bei geringem Abwasseranfall auf ein sehr geringes Minimum zu reduzieren, ohne eine Schädigung der Mikroorganismen befürchten zu müssen.

Es ist aber durchaus auch möglich, die Sauerstoffversorgung der Mikroorganismen, die sich auf der Füllkörperpackung ansiedeln, ausschließlich dadurch zu bewirken, dass die Füllkörperpackung angehoben und damit der Umgebungsluft ausgesetzt wird. Eine solche Lösung ist beispielsweise bei der Anwendung zur Reinigung von Oberflächengewässern darstellbar.

Weiters betrifft die vorliegende Erfindung eine Vorrichtung zur Reinigung von verschmutztem Wasser mit einem Grundkörper, der seitlich eine im Wesentlichen geschlossene Wand aufweist, oben und unten offen ist und in seinem Inneren eine Füllkörperpackung aufweist.

Erfindungsgemäß ist vorgesehen, dass der Grundkörper als Schwimmkörper ausgebildet ist, der eine Höhenverstelleinrichtung aufweist, die den Schwimmkörper unter eine Wasseroberfläche absenken und über die Wasseroberfläche anheben kann, und dass im unteren Bereich vorzugsweise Belüftungsdüsen zur Einführung von Luft unter den Schwimmkörper angeordnet sind. Die erfindungsgemäße Vorrichtung besitzt einen sehr einfachen Aufbau und ermöglicht bei kleinen Abmessungen die Erzielung einer hohen Reinigungsleistung. Ein besonderer Vorteil der Erfindung besteht darin, dass eine Kläranlage, die mit einer solchen Vorrichtung ausgerüstet ist, äußerst robust gegenüber sehr großen Schwankungen im Abwasseranfall ist.

Insbesondere ist es günstig, wenn die Füllkörpereinrichtung pneumatisch höhenverstellbar ist. Außer der ohnehin vorhandenen Luftversorgung ist bei einer solchen Lösung keinerlei zusätzliche Antriebseinrichtung notwendig.

Vorzugsweise ist die Füllkörpereinrichtung durch Veränderung des Auftriebs höhenverstellbar. In einem gewissen Ausmaß erfolgt die Höhenverstellung selbsttätig, da sich während der Belüftung die durchschnittliche Dichte des Abwassers im Belüftungsbecken ändert. Aufgrund der eingetragenen Luft sinkt die durchschnittliche Dichte, so dass der Auftrieb des Belüftungskörpers geringer wird und dieser tiefer in das Belüftungsbecken einsinkt. Umgekehrt steigt der Belüftungskörper nach dem Ende der Belüftung selbsttätig entsprechend der Dichteänderung im Belüftungsbecken an. Diese natürliche Höhenänderung kann durch gezieltes Einblasen von Luft in entsprechende Auftriebskörper unterstützt werden.

Besonders günstig ist es, wenn die Belüftungsdüsen am Grundkörper unterhalb der Füllkörperpackung angebracht sind. Bei dieser Ausführung wird erreicht, dass alle wesentlichen Teile zur Reinigung von Abwasser kompakt in einer einzigen Baugruppe zusammengefasst sind. Bei der Anwendung für eine Kläranlage ist es daher lediglich erforderlich, ein entsprechendes Becken mit den notwendigen Anschlüssen vorzusehen, das jedoch keinerlei sonstige Einbauten, wie etwa Düsen, Rührer oder Pumpen, benötigt. Auf diese Weise wird auch die Wartung erleichtert, da die Belüftungsdüsen in einfacher Weise dadurch inspiziert und gewartet werden können, dass die Vorrichtung aus dem Becken herausgehoben wird.

In einer konstruktiv besonders einfachen und kostengünstigen Lösung ist vorgesehen, dass die Vorrichtung Ketten aufweist, um die Hubbewegung zu begrenzen und die Position zu sichern.

Bei der Anwendung in Oberflächengewässern kann unter Umständen das Problem auftreten, dass die aus dem Wasser angehobene Vorrichtung als unschön oder störend empfunden wird. Dies kann dadurch vermieden werden, dass die Vorrichtung an der Oberseite dekorative Elemente aufweist. Es ist auch möglich, dass die Außenhülle der Vorrichtung selbst im Sinne eines Kunstwerks entsprechend gestaltet ist.

In der Folge wird vorliegende Erfindung anhand des in den Figuren dargestellten Ausführungsbeispiels näher erläutert. Es zeigen:
- Fig. 1: einen Schnitt durch eine Kläranlage mit einer erfindungsgemäßen Vorrichtung in abgesenkter Stellung;
- Fig. 2: die Kläranlage von Fig. 1 mit der Vorrichtung in angehobener Stellung; und
- Fig. 3: eine schematische Draufsicht auf eine Kläranlage, die mit Vorrichtungen entsprechend der Erfindung ausgestattet ist.

Ein Belüftungsbecken 1 ist mit dem zu reinigenden Abwasser 2 gefüllt. In dem Belüftungsbecken 1 ist dabei die erfindungsgemäße Vorrichtung in vertikaler Richtung beweglich angeordnet. Die Vorrichtung besitzt einen Grundkörper 3, der aus einer zylindrischen oder rechteckigen Wand 4 besteht, die einen seitlichen Abschluss darstellt, und einer Füllkörperpackung 5 innerhalb der Wanne 4. Die Füllkörperpackung 5 ist an der oberen Fläche 6 und an der unteren Fläche 7 offen, um einen Gasaustausch mit der Umgebung zu ermöglichen. Unterhalb der unteren Fläche 7 der Füllkörperpackung 5 sind Belüftungsdüsen 8 vorgesehen, die ein Einblasen von Luft zur Belüftung der Füllkörperpackung 5 ermöglichen.

Im unteren Bereich der Vorrichtung sind Auftriebskörper 9 vorgesehen, die über eine flexible Leitung 10 mit einer nicht dargestellten Luftquelle in Verbindung stehen. Durch das Einblasen von Luft in die Auftriebskörper 9 kann das Anheben oder Absenken der Vorrichtung bewirkt werden. Eine Kette 11 dient dazu die Position der Vorrichtung festzulegen und insbesondere die Hubhöhe zu begrenzen. Die Kette 11 ist im oberen Bereich des Belüftungsbeckens 1 befestigt und kann dort leicht gelöst werden, wenn die Vorrichtung zu Wartungszwecken aus dem Belüftungsbecken 1 zu entnehmen ist.

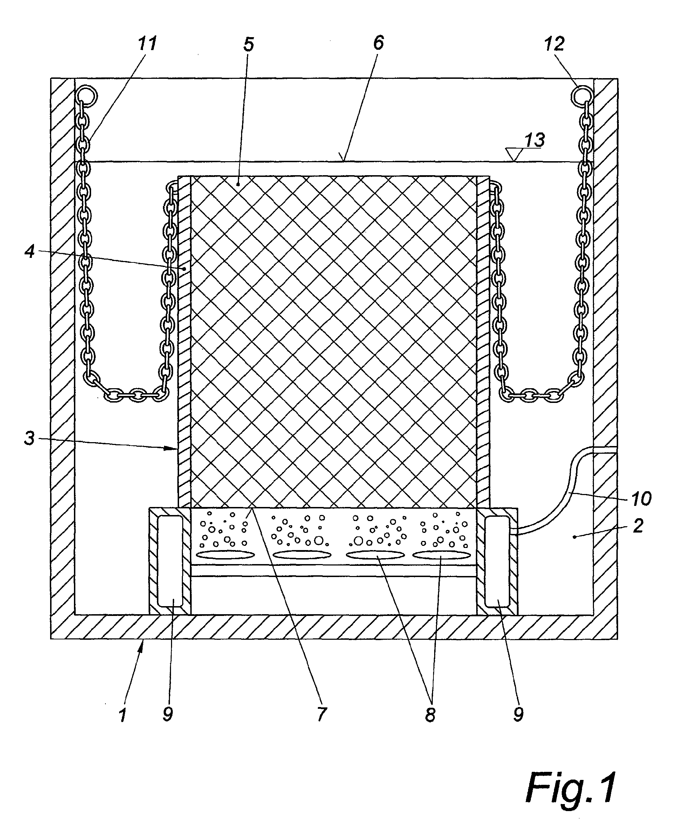

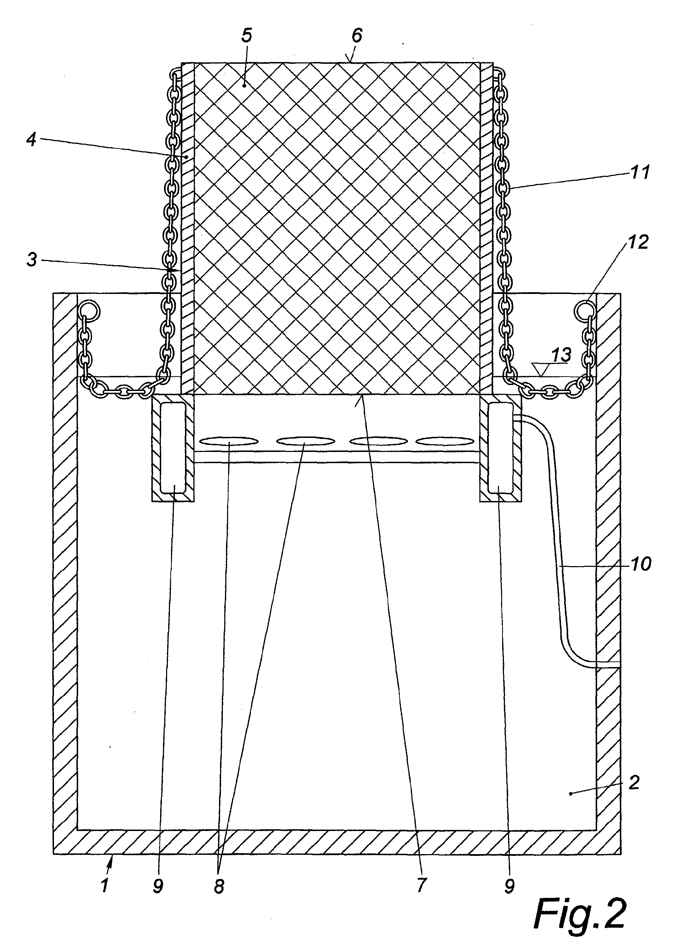

In Fig. 1 ist die Vorrichtung in der abgesenkten Stellung gezeigt, in der die obere Fläche 6 der Füllkörperpackung 5 unterhalb der Wasseroberfläche 13 liegt. Bei der Stellung in Fig. 2 ist die Vorrichtung durch Einblasen von Luft in die Auftriebskörper 9 so weit angehoben, dass die Füllkörperpackung 5 nahezu vollständig oberhalb der Wasseroberfläche 13 angeordnet ist. In einer solchen Stellung kann bei geringem Abwasseranfall ein Absterben der Mikroorganismen auch ohne zusätzliche Belüftung verhindert werden. Auf diese Weise kann die für die Belüftung notwendige Energie eingespart werden.

In Fig. 2 ist ersichtlich, dass in der angehobenen Stellung der Grundkörper 3 so weit über die Wasseroberfläche 13 erhoben ist, dass sich die Füllkörperpackung 5 praktisch vollständig außerhalb des Wassers befindet. Damit werden die Füllkörper belüftet und es wird den Mikroorganismen der notwendige Sauerstoff zugeführt. Je nach Abwasseranfall wird die Zeitdauer und die Häufigkeit der Phasen bestimmt, in denen die Vorrichtung angehoben wird.

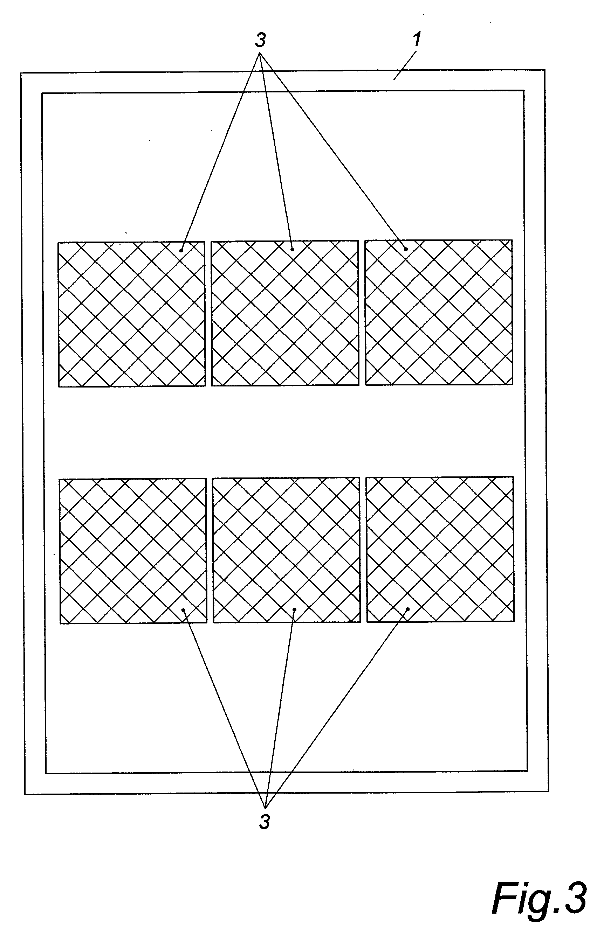

Es ist im Sinne der Erfindung auch möglich, mehrere erfindungsgemäße Vorrichtungen in einem Belüftungsbecken 1 anzuordnen, wie dies in Fig. 3 schematisch dargestellt ist. Auf diese Weise ist es möglich, die einzelnen Vorrichtungen alternierend in einem bestimmten Zyklus anzuheben und abzusenken. In analoger Weise ist dies ebenfalls für ein Oberflächengewässer durchführbar.

Die vorliegende Erfindung ermöglicht eine effiziente Reinigung von verschmutztem Wasser mit geringem Aufwand, wobei sich der Einsatzbereich sowohl auf Kläranlagen als auch auf andere Anwendungsbereiche erstreckt.

## Patentansprüche

1. Verfahren zur Reinigung von verschmutztem Wasser, bei dem im Wasser eine Füllkörperpackung (5) angeordnet wird, die von Mikroorganismen besiedelt ist, und diese Füllkörperpackung (5) zumindest zeitweise belüftet wird, **dadurch gekennzeichnet, dass** die Belüftung zumindest teilweise dadurch erfolgt, dass die Füllkörperpackung (5) als Ganzes über die Wasseroberfläche (13) angehoben wird.

2. Verfahren nach Anspruch 1, **dadurch gekennzeichnet, dass** die Füllkörperpackung (5) pneumatisch angehoben und abgesenkt wird, wobei vorzugsweise in einen Auftriebskörper (9) Luft eingeblasen wird bzw. der Auftriebskörper (9) geflutet wird.

3. Vorrichtung zur Reinigung von verschmutztem Wasser mit einem Grundkörper (3), der seitlich eine im Wesentlichen geschlossene Wand (4) aufweist, oben und unten offen ist und in seinem Inneren eine Füllkörperpackung (5) aufweist, **dadurch gekennzeichnet, dass** der Grundkörper (3) als Schwimmkörper ausgebildet ist, der eine Höhenverstelleinrichtung aufweist, die den Schwimmkörper unter eine Wasseroberfläche (13) absenken und über die Wasseroberfläche (13) anheben kann, und dass im unteren Bereich vorzugsweise Belüftungskörper (8) zur Einführung von Luft unter die Füllkörperpackung (5) angeordnet sind.

4. Vorrichtung nach Anspruch 3, **dadurch gekennzeichnet, dass** die Höhenverstelleinrichtung pneumatisch betätigt ist.

5. Vorrichtung nach Anspruch 4, **dadurch gekennzeichnet, dass** die Höhenverstelleinrichtung mindestens einen Auftriebskörper (9) umfasst, dessen Auftrieb veränderbar ist, um die Vorrichtung anzuheben oder abzusenken.

6. Vorrichtung nach einem der Ansprüche 3 bis 5, **dadurch gekennzeichnet, dass** die Belüftungsdüsen (8) am Grundkörper (3) unterhalb der Füllkörperpackung (5) angebracht sind.

7. Vorrichtung nach einem der Ansprüche 3 bis 6, **dadurch gekennzeichnet, dass** die Vorrichtung so weit anhebbar ist, dass die Füllkörperpackung (5) im Wesentlichen vollständig oberhalb der Wasseroberfläche (13) liegt.

8. Vorrichtung nach einem der Ansprüche 3 bis 7, **dadurch gekennzeichnet, dass** die Vorrichtung Ketten (11) aufweist, um die Hubbewegung zu begrenzen und die Position zu sichern.

9. Vorrichtung nach einem der Ansprüche 3 bis 9 zur Reinigung von Oberflächengewässern, **dadurch gekennzeichnet, dass** die Vorrichtung an der Oberseite dekorative Elemente aufweist.

10. Vorrichtung zur Reinigung von Abwasser mit einem Belüftungsbecken (1), **dadurch gekennzeichnet, dass** in dem Belüftungsbecken (1) eine Vorrichtung nach einem der Ansprüche 3 bis 9 angeordnet ist.
